# EUROPEAN PATENT APPLICATION

(11) **EP 1 710 982 A1**
(43) Date of publication of application: **11.10.2006**
(21) Application number: 05290741.7
(22) Date of filing: 04.04.2005
(51) Int. Cl.: H04L 29/08

(54) **Authentication method and authentication unit**

(71) Applicant: ALCATEL, 75008 Paris (FR)
(72) Inventor: van Moffaert, Annelies Marie Etienne, 2350 Vosselaar (BE); van Ewijk, Adrianus Johannes, 2000 Antwerpen (BE)
(74) Representative: Narmon, Gisèle Marie Thérèse

(57) **Abstract**

The present invention describes an authentication method for use in a telecommunication system for providing Internet Protocol Multimedia services to a user using a terminal (T1,T2,T3) of a customer premises multimedia equipment (EQUIP) and having a user identification (U1,U2,U3,U4). The method comprises, in the event when the user identification is one of a first plurality of user identifications that are sharing a first fixed access line (L1), the steps of:
- predefining in a storing means (MEM) for each one of a plurality of fixed access lines (L1,L2,...,L16) that comprises this first fixed access line (L1), an association between the one fixed access line and a plurality of Internet Protocol Multimedia Subsystem profiles and providing thereby a plurality of associations, each one of the plurality of Internet Protocol Multimedia Subsystem profiles is related to one of a plurality of user identifications that are sharing the one fixed access line. The plurality of associations comprises hereby a first plurality of associations between the first fixed access line and a first plurality of Internet Protocol Multimedia Subsystem Profiles, each being related to one of the first plurality of user identifications; and
- transmitting by the terminal a service request (REQ), that comprises the user identification (U3), via the first fixed access line; and
- determining with a processor (P), for the service request, the user identification and the first fixed access line; and
- controlling with the processor the plurality of associations, upon the presence of an association between the first fixed access line and an Internet Protocol Multimedia Subsystem Profile (P13) that is related to the user identification; and
- providing by the processor authentication (OK) for the user identification for at least one Internet Protocol Multimedia Subsystem service.

## Description

The present invention relates to an authentication unit that realizes an authentication method for providing Internet Protocol Multimedia Services, shortly called hereafter IMS, to a user.

IMS is well known within Global System for Mobile communications - 3GPP telecommunication systems. In the Introduction of the Technical Report *with reference 3GPP TR 33.878 V1.0.0 (2004-12) with title* "3^{rd} *Generation* Partnerschip Project; Technical Specification *Group Services and Systtem* Aspects; *Security Aspects of Early IMS* (Release 6)" it is described that 3GPP IMS provides an IP-based session control capability based on the Session Initiation Protocol. IMS can be used to enable services such as push-to-talk, instant messaging, presence and conferencing. It is also described in the introduction that there is a need to ensure that simple, adequately secure, mechanisms are in place to protect against the most significant security threats.

This means that the mobile 3GPP IMS methods assume a security association between the mobile terminal and the network.

Implementation in the fixed environment where most terminals will be always logged on, of such security associations would imply for all these terminals a security association on a permanent basis. This would be highly resource consuming for the network since a security association requires that the IMS network entities maintain lots of state, and should be considered as a scalability bottleneck.

IMS both in a fixed and mobile context cover a large set of usage scenarios ranging from e.g. a subscriber making a simple phone call over his Digital Subscriber Line i.e. DSL-line, up to e.g. a subscriber accessing his IMS services via a public hotspot while on vacation at the other end of the world.

These different use examples do need different trust models and corresponding different security requirements with different security methods. An authentication method for use in a telecommunication system for providing IMS services to a user with user identification using a terminal of customer premises multimedia equipment is part of such a security method.

Full IMS assumes that the end-user can be in the public domain and that IMS security should be independent of the underlying access network. When it is required to design a security model that covers all and every scenario then security must cover the most stringent case. However, it is known that a full security solution that covers the most stringent case implies a cost and impact on network resources and terminal.

An object of the present invention is to provide an authentication method such as the known prior art authentication methods but that is suitable for a user in a fixed telecommunication environment but that has not the above-mentioned disadvantages of required cost and impact on network resources and terminal.

Indeed, the present applications is partly based on the insight that in most of the cases a user is at home, accessing the telecommunication system via his fixed access line, whereby most of the usage of the IMS services will be from home where a simpler scenario with lower security requirements is sufficient whereby it is useful to design a simpler solution for this majority of home deployments. Furthermore, the proposed solution ensures smooth coexistence of the simple and the most complex scenarios. With the declining voice revenues, fixed network operators are today highly interested in IMS services and to combine IMS with their current service offering. Hereby, the present application is further based upon the insight that:
- all users that share a fixed access line have complete trust in each other; and
- there is one fixed Next generation Network NGN subscription, both for the access resource consumption and the usage of IMS services.
- there is a managed association between fixed access line subscription e.g. xDSL line and a set of fixed NGN service IMS identities, called IMS profiles. As an example it is explained that different members of a family have their individual IMS identities configured by the operator so that they receive and initiate IMS calls over the same fixed access line using their own profile(s). According to the invention, the object is achieved by the authentication method being realized by the authentication unit, such as the prior art method and unit, but wherein, in the event when the user identification is one of a plurality of user identifications that are sharing a first fixed access line via which the authentication unit is coupled to the customer premises multimedia equipment, the method comprises the following characteristic steps:

- predefining in a storing means of the authentication unit for each one of a plurality of fixed access lines that comprises this first fixed access line, an association between the one fixed access line and a plurality of Internet Protocol Multimedia Subsystem profiles and providing thereby a plurality of associations. Each one of the plurality of Internet Protocol Multimedia Subsystem profiles being related to one of a plurality of user identifications sharing the one fixed access line. The plurality of associations comprising hereby a first plurality of associations between the first fixed access line and the first plurality of Internet Protocol Multimedia Subsystem Profiles each being related to one of the first plurality of user identifications; and
- transmitting by the terminal of the user a service request via the first fixed access line, the service request comprising the user identification; and
- determining with a processor of the authentication unit, for the service request, the user identification and the first fixed access line; and
- controlling with the processor, the plurality of associations, upon the presence of an association between the first fixed access line and an Internet Protocol Multimedia Subsystem Profile being related to the user identification; and
- providing by the processor authentication for the user identification for at least one Internet Protocol Multimedia Subsystem service.

This means that in stead off keeping the numerous security associations, the network only keeps a mapping between the Digital Subscriber Line DSL line Identification or equivalent identity that identifies the fixed access line, possibly an allocated IP address and the different IMS identities that correspond to such a particular line. Possible fixed access line identifications, typical called Customer Line Identification CLID, are e.g. a Virtual Private Network VPN identity, Ethernet Virtual Local Area Network VLAN identity. In this way the network performs source filtering at IMS level. It has to be explained that line authentication e.g. in xDSL networks is the only required authentication mechanism for getting its IP connectivity and for getting access to IMS services, however the present authentication method works also with other access authentication method such as e.g. PPP-based or IEEE 802.1.x based. This means that the authentication method according to the present invention is not limited to line authentication only.

The aim is that a group of users are sharing a common fixed access link to access the access network and that this group of users is uniquely identified. This identification can be determined either directly via the fixed access line identification itself or either via other kinds of unique identification of this group of users such as described above.

The access provider maintains the mapping between an access line and corresponding set of fixed Next generation Network NGN - IMS identities and services, herein also called IMS Profiles. No IMS specific authentication signaling is required from the terminal of the Customer Premises Equipment to get access to its IMS services. Furthermore, there is no need to provide cryptographic protection of IMS signaling.

Although that the early IMS as specified by 3GPP describes that IMS, IMS ID is mapped to allocated IP address, such an implementation requires more communication between different network elements and implementation of anti IP address spoofing measures. The present application provides a mapping between fixed line identification i.e. first fixed line and a set of user identities. Contrary to early IMS, in the present application the DSL line identification allows a one-to-many mapping, i.e. one single line identification can map to multiple IMS subscribers.

The IMS as specified by 3GPP requires terminals to support IP-security and to have a smart card with IMS - Subscriber Identity Modules, called ISIM, for mutual authentication. The terminals of the present application don't need to support IP-security and terminals in the fixed world often do not support smart cards.

A further characteristic feature of the present invention is that the end-user can manage the list of allowed IMS users himself, through for instance a dedicated application or via other means e.g. SMS, email, etc....

Hereby, the step of predefining the plurality of associations comprises dynamically providing the first plurality of associations via a predefined web interface and via the user identification. Dynamically providing the first plurality of associations, means that the DSL subscriber i.e. one of the first plurality of users that is responsible for the DSL line is enabled to manage via its user identifications and via a predefined web interface the different IMS profiles of its DSL line. Managing the first plurality of IMS profiles means that this user is enabled to create, delete and adapt the different IMS profiles i.e. keeping up-to-date.

This dynamic feature enables also this fixed access line subscriber to host visiting IMS subscribers that make use of the access line resource whereby the authentication for this visiting IMS subscribers to IMS services is controlled through a list that is managed by the access network or IMS operator and by the DSL or IMS subscriber who "owns" the DSL line i.e. who has a subscription for the access line. Hereby, simple nomadicity is allowed by allowing visitors to use someone's home fixed access line whereby the owner of the access line creates for this visitor an IMS profile within the first plurality of associations. Hereby a further characteristic feature of the present application describes that the first plurality of associations comprises a host-user Internet Protocol Multimedia Subsystem Profile being related to a host-user identification identifying a host-user sharing the one fixed access line under a control of the user. It has to be explained that all initiated IMS calls are hereby by default charged on the fixed Next Generation Network subscription, although that mechanisms can be developed to charge calls of visiting IMS users to their own subscription.

A following characterizing features is that the steps of predefining, determining, controlling and providing are executed by a node that is capable of identifying the individual access lines, such as an access node or another network element.

This means that integration of the authentication unit in e.g. the access node whereto the first access line is coupled, provides the advantage of having the functionalities for determining the fixed access line identification available.

Indeed, by integrating the IMS into transport network nodes such as a digital subscriber line access node i.e. a transport network node, an IP edge service router or other network nodes that are typically of interest to fixed access network operators, the security association is easily ensured.

A further characteristic feature of the present application is that the step of predefining is implemented according to a distributive way whereby this step comprises:
- a first sub-step of predefining in a first sub-storing means of the storing means, first sub-associations between each one of the plurality of fixed access lines and an assigned Internet Protocol address being assigned to the one fixed access line; and
- a second sub-step of predefining in a second sub-storing means of the storing means, second sub-associations between the assigned Internet Protocol address and the plurality of Internet Protocol Multimedia Subsystem profiles; and whereby the controlling step comprises
- a first sub-controlling step, to be executed by a first sub-processor of the processor, of controlling the first sub-storing means upon the presence of an association between the first fixed access line and a the assigned Internet Protocol address and providing thereby the assigned Internet Protocol address; and based upon the assigned Internet Protocol address
- a second sub-controlling step, to be executed by a second sub-processor of the processor, of controlling the second sub-storing means upon the presence of an association between the assigned Internet Protocol address and an Internet Protocol Multimedia Subsystem profile being related to the user identification.

Furthermore the authentication method according to the present application comprises executing the first sub-controlling step by an access node and executing the second sub-controlling step by an Application Server Provider.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
- Figure 1 represents a telecommunication system with an authentication unit AU according to the present application; and
- Figure 2 represent a telecommunication system with a distributive implementation of the authentication unit AU21, AU22 according to the present application.

The working of the device according to the present invention in accordance with its telecommunication environment that is shown in the figures will be explained by means of a functional description of the different blocks shown therein. Based on this description, the practical implementation of the blocks will be obvious to a person skilled in the art and will therefor not be described in details. In addition, the principle working of the authentication method will be described in further detail.

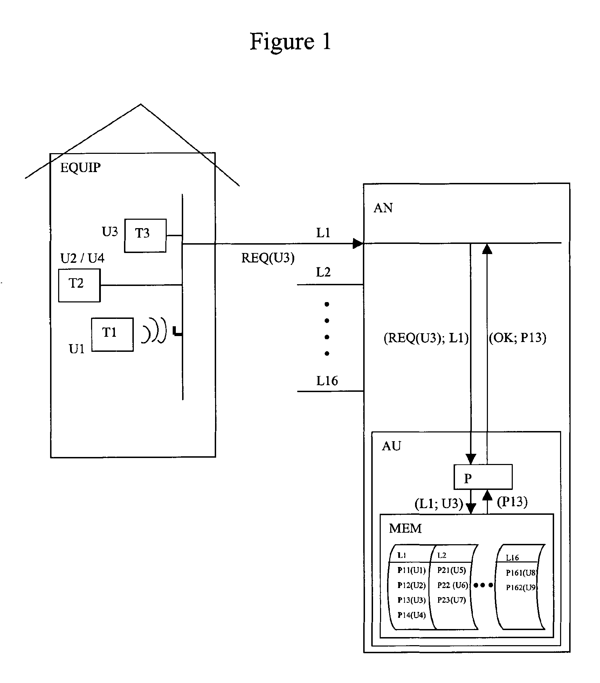

Referring to Figure 1, a telecommunication system is shown. The telecommunication system comprises a customer premises multimedia equipment EQUIP and an access node AN. The customer premises multimedia equipment EQUIP is coupled to the access node via a first fixed access line L1. The access node AN is also coupled to other customer premises multimedia equipment (not shown) via other access lines whereof some are shown L2, ..., L16.

The customer premises multimedia equipment EQUIP comprises the following kind of terminals:
- a wireless IP telephone called T1 for use by e.g. user U1, which is coupled via a wireless interface to the fixed access line L1; and
- a personal computer PC called T2, for use by e.g. user U2 or U4, which is coupled via a fixed line to the first fixed access line L1; and
- a fixed telephone, hereafter also shortly called terminal T3, for user by user U3, and coupled via a fixed line interface to the fixed access line L1.

The Access node comprises an authentication unit AU according to the present invention. The Authentication unit AU is coupled to an input of the Access Node AN. The authentication unit AU comprises a processor P and a memory MEM. The memory MEM is a possible implementation of a storage element. The processor P is coupled to an input of the authentication unit AU and to the memory MEM.

The authentication unit is provided to execute an authentication method for use in the telecommunication system for providing Internet Protocol Multimedia services to a user e.g. user U3 using terminal T3 and having a user identification U3.

It has to be remarked that, in order not to overload this description and Figures, the users e.g. U3 and its user identification U3 are named the same. Indeed, it is clear for the person skilled in the art that a user identification comprises a reference to the user to be used and/or related to an reference being used in the network. However, this goes beyond the aim of the present invention.

According to the topology of the access network, it is clear that the users U1, U2, U3 and U4 are part of a first plurality of user identifications U1, U2, U3, and U4 that are sharing the same fixed access line i.e. access line L1.

The memory MEM is comprised in the authentication unit AU for storing for each one of a plurality of access lines, such as the plurality of access lines L1, L2, ..., L16 an association between one of the fixed access lines and a plurality of Internet Protocol Multimedia Subsystem profiles.

In this way, for each one of the plurality of fixed access lines e.g. access line L1, and association is predefined between this fixed access line L1 and a plurality of Internet Protocol Multimedia Subsystem profiles. More precisely, each one of this plurality of Internet Protocol Multimedia Subsystem profiles, being predefined to be associated to L1, is related to one of the plurality of user identification i.e. U1, U2, U3 and U4, that are sharing this fixed access linen L1. The plurality of defined associations comprises hereby a first plurality of associations between the first fixed access line L1 and a first plurality of Internet Protocol Multimedia Subsystem Profiles P11(U1), P12(U2), P13(U3) and P14(U4), each being related, respectively, to one of the first plurality of user identifications U1, U2, U3 and U4.

It has to be clear that for such a fixed access line L1 that is shared among the different users U1, U2, U3 and U4 with its terminal a common trust and understanding is available regarding the use of the fixed access line. One of the users e.g. user U3 also has the subscription of the access line at the operator.

In this way the plurality of associations is predefined and provided in the memory MEM for each one of the fixed access lines.

It has to be remarked that the predefinition of the different associations might be provided and adapted in a dynamic way. This means that the e.g. the available terminals that are sharing the same fixed access line might chance over time e.g. extension of the number of terminals, whereby the association in the memory MEM should be adapted.

In order to provide flexibility towards the users of the Internet Protocol Multimedia services, the predefinition of the associations might be dynamically provided via a predefined secure web interface. It is understood that only a user that is sharing a fixed access line receives the authorization to adapt the associations related to this fixed access line e.g. user U3 receives the authorization to adapt the associations related to the user identifications U1, U2, U3 and U4.

It has to be remarked that this flexibility can be extended with SMS and e-mail based methods.

In this way, such a user U3 can generate a host-user Internet Protocol Multimedia Subsystem Profile that is related to a host-user identification that identifies a host-user sharing e.g. temporarily his fixed access line under a control of this user U3.

In the event when one of the users e.g. U3 desires to log on to the network and to use an Internet Protocol Multimedia Service, its terminal T3 is enabled to transmit a service request REQ(U3). This service request REQ(U3) comprises, besides others, the users identification U3.

This service request REQ(U3) is provided via the fixed access line L1 to the network.

The processor P of the authentication unit AU is enabled to determine for this service request REQ(U3) the user identification U3 and also the first fixed access line L1 via which this service request REQ(U3) was received by the access network. This can be realized e.g. by retrieving with the processor P the user identification U3 from the service request REQ(U3) and by receiving from the access node AN, in which the authentication unit AU is embedded according to this described implementation, the access line reference L1 via which the service request REQ(U3) was received. This is shown in Figure 1 with the arrow (REQ(U3), L1).

In order to control whether the user U3 is indeed authenticated to use the desired Internet Protocol Multimedia Service, the processor P executes a control check upon the memory MEM. The processor P controls the plurality of associations of the memory MEM upon the presence of an association between the first fixed access line L1, via which the service request REQ(U3) was transmitted, and an Internet Protocol Multimedia Subsystem Profile that is related to the user identification of the user that desires to make use of the service i.e. the user identification U3. This check from the processor P upon the memory MEM is shown with the arrow (L1, U3).

In the event when the association is not present, the memory MEM might return a negative control signal. In the event when the association is present the memory MEM returns a positive control signal, which is shown in Figure 1 with P13 i.e. the reference to the Internet Protocol Multimedia Subsystem Profile of user U3.

Upon reception of a negative control signal of the memory MEM, the processor P can provide a negative authentication towards the terminal but might as well forward the authentication request deeper into the network in order to make it subject to known authentication methods such as the ISIM authentication that is known in IMS.

Upon reception of a positive control signal of the memory MEM, the processor P provides an authentication control signal for the user identification U3 for the desired Internet Protocol Multimedia Subsystem service. This is shown in Figure 1 with the arrow (OK; P13).

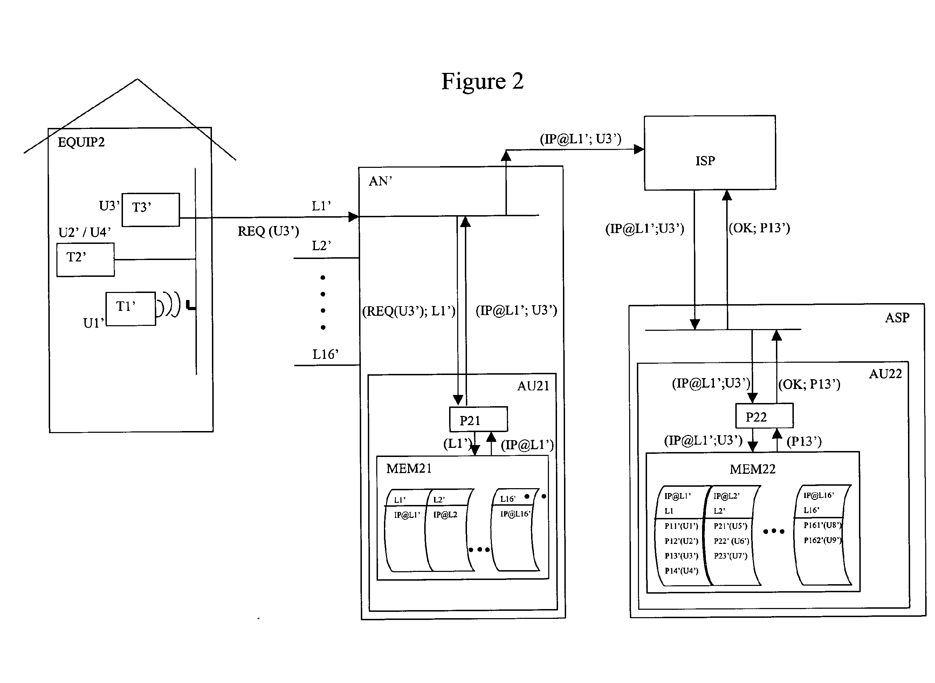

Referring to Figure 2, an embodiment of the present invention is shown wherein the authentication unit AU is implemented according to a distributive way. Hereby the telecommunication system of Figure 2 comprises a customer premises equipment EQUIP' such a in Figure 1 being coupled to an access node AN' via a first fixed access link L1'. The customer premises equipment EQUIP' comprises a terminal T1' used by user U1' and a terminal T2' used by user U2 and/or user U4 and a terminal T3' used by user U3'.

The customer premises equipment EQUIP' is coupled via a first fixed access line L1' to the access node AN'. The access node AN' is also coupled to other fixed access links such as e.g. L2' and L16'.

This telecommunication system further comprises an Application Server Provider ASP and an Internet Service Provider ISP.

The Internet Service Provider ISP is coupled to the access node AN' and to the application Server Provider ASP.

The authentication unit according to the present invention comprises according to the distributive implementation two parts: AU21 and AU22.

The first part AU21 is comprised in the access node AN' and the second part AU22 is comprised in an Application Server Provider. Hereby the memory comprises a first sub-memory MEM21 and a second sub-memory MEM22, and the processor comprises a first sub-processor P21 and a second sub-processor P22. The first sub-memory MEM21 and the first sub-processor P21 are comprised in the access node AN' and the second sub-memory MEM22 and the second sub-processor P22 are comprised in the Application Server Provider ASP.

The first sub-memory MEM21 is comprised in the first part of the authentication unit AU21 to store first sub-associations between each one of the plurality of fixed access lines e.g. L1' and an assigned Internet Protocol address e.g. IP@L1' that is assigned to the one fixed access line e.g. L1'.

It has to be understood that this assignment of an Internet address to a fixed access line is not necessarily a permanent assignment. Indeed, the assignment of an Internet address to a fixed access line is usually provided at the time when the fixed access line becomes actively in use. So, the assignment of the Internet protocol address is usually a temporarily provided address.

The second sub-memory MEM22 is comprised in the second part of the authentication unit AU22 to store second sub-associations between the assigned Internet Protocol address and the plurality of Internet Protocol Multimedia Subsystem profiles. It has to be remarked that such a sub-memory MEM 22 can comprise also associations related to an Internet Protocol address that is assigned to other fixed access lines as the one that are shown in Figure 2 and that are coupled to the shown access node AN'. Indeed, this second sub-memory MEM22 can serve also other access nodes besides the own AN' shown in Figure 2.

The first sub-processor P21 is comprised in the first part AU21 of the authentication unit to control the first sub-memory MEM21 upon the presence of an association between the first fixed access line L1' and a the assigned Internet Protocol address IP@L1' and to provide thereby the assigned Internet Protocol address.

The second sub-processor P22 is comprised in the second part of the authentication unit AU22 to control, further based upon the assigned Internet Protocol address, the second sub-memory M22 upon the presence of an association between the assigned Internet Protocol address IP@L1' and an Internet Protocol Multimedia Subsystem profile e.g. P13(U3') that is related to the user identification U3'.

Now, in the event when one of the users e.g. U3' desires to log on to the network and to use an Internet Protocol Multimedia Service, its terminal T3' is enabled to transmit a service request REQ(U3'). This service request REQ(U3') comprises, besides others, the users identification U3'.

This service request REQ(U3') is provided via the fixed access line L1' to the network.

Upon reception of the service request REQ(U3') by the access node AN', the second sub-processor P21 executes the first sub-controlling step i.e. controlling the first sub-memory MEM21 upon the presence of an association between the first fixed access line L1' and an assigned Internet Protocol address. This is shown in Figure 2 with the arrow (L1'). When this controlling step is positive, the assigned Internet Protocol address IP@L1' of the first fixed access line L1' is provided to the first sub-processor P21.

The first sub-processor P21 returns to the access node AN' the assigned Internet Protocol address IP@L1' and the user identification U3'.

This assigned Internet Protocol address IP@L1'and the user identification U3' are both provided to the Application Server Provider ASP, optional via the Internet Service Provider ISP.

Based upon the retrieved assigned Internet Protocol address IP@L1' and the user identification U3' a second sub-controlling step is executed by the second sub-processor P22 i.e. controlling the second sub-memory MEM22 upon the presence of an association between the assigned Internet Protocol address IP@L1' and an Internet Protocol Multimedia Subsystem profile being related to the user identification U3'. This is shown in figure 2 with (IP@L1';U3').

In the event when such an association is present the second sub-memory MEM22 returns a positive control signal (P13'). Hereby the second sub-processor P22 provides an authentication control signal (OK;P13') for the user identification U3' for the desired Internet Protocol Multimedia Subsystem service. This is shown in Figure 2 with the arrow (OK; P13').

It has to be remarked that other embodiments regarding the integration of the authentication unit are possible. Indeed, small modifications can be made to the above made description in order to adapt it to an embodiment wherein at least part of the authentication unit i.e. either the authentication unit AU of Figure 1, or the first part of the authentication unit AU21 of Figure 2, or the second part of the authentication unit AU22 of Figure 2 is integrated in the Internet Service Provider ISP.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Authentication method for use in a telecommunication system for providing Internet Protocol Multimedia services to a user using a terminal (T3) of a customer premises multimedia equipment (EQUIP) and having a user identification (U3), **characterized in that** in the event when said user identification being one of a first plurality of user identifications (U1, U2, U3, U4) sharing a first fixed access line (L1), said authentication method comprises the steps of:
- predefining in a storing means (MEM) for each one of a plurality of fixed access lines (L1, L2, ..., L16) that comprises said first fixed access line (L1), an association between said one fixed access line and a plurality of Internet Protocol Multimedia Subsystem profiles and providing thereby a plurality of associations, each one of said plurality of Internet Protocol Multimedia Subsystem profiles being related to one of a plurality of user identifications sharing said one fixed access line; said plurality of associations comprising hereby a first plurality of associations between said first fixed access line (L1) and a first plurality of Internet Protocol Multimedia Subsystem Profiles (P13) each being related to one of said first plurality of user identifications (U1, U2, U3, U4); and
- transmitting by said terminal (T3) a service request (REQ) via said first fixed access line (L1), said service request (REQ) comprising said user identification (U3); and
- determining with a processor (P), for said service request (REQ), said user identification (U3) and said first fixed access line (L1); and
- controlling with said processor (P), said plurality of associations, upon the presence of an association between said first fixed access line (L1) and an Internet Protocol Multimedia Subsystem Profile (P13) being related to said user identification (U3); and
- providing by said processor (P) authentication (OK; P13) for said user identification (U3) for at least one Internet Protocol Multimedia Subsystem service.

2. The authentication method according to claim 1, **characterized in that** said step of predefining said of associations comprises dynamically providing said first plurality of associations via a predefined secure web interface and via said user identification (U3).

3. The authentication method according to claim 1, **characterized in that** said first plurality of associations comprises a host-user Internet Protocol Multimedia Subsystem Profile being related to a host-user identification identifying a host-user sharing said one fixed access line under a control of said user.

4. The authentication method according to claim 1, further **characterized by** executing said steps of predefining, determining, controlling and providing by an access node (AN).

5. The authentication method according to claim 1, **characterized in that** said step of predefining being implemented according to a distributive way whereby it comprises:
- a first sub-step of predefining in a first sub-storing means (MEM21) of said storing means, first sub-associations between each said one of said plurality of fixed access lines and an assigned Internet Protocol address being assigned to said one fixed access line; and
- a second sub-step of predefining in a second sub-storing means (MEM22) of said storing means, second sub-associations between said assigned Internet Protocol address and said plurality of Internet Protocol Multimedia Subsystem profiles; and whereby said controlling step comprises
- a first sub-controlling step of controlling said first sub-storing means (MEM21) upon the presence of an association between said first fixed access line and a said assigned Internet Protocol address and providing thereby said assigned Internet Protocol address; and based upon said assigned Internet Protocol address
- a second sub-controlling step of controlling said second sub-storing means (MEM22) upon the presence of an association between said assigned Internet Protocol address and an Internet Protocol Multimedia Subsystem profile being related to said user identification.

6. The authentication method according to claim 4, further
**characterized by**
executing said a first sub-controlling step by an access node (AN); and
executing said a second sub-controlling step by an Application Server Provider (ASP).

7. Authentication unit (AU) for use in a telecommunication system for providing Internet Protocol Multimedia subsystems services to a user using a terminal (T3) of a customer premises multimedia equipment (EQUIP) and having a user identification (U3), **characterized in that** in the event when said user identification being one of a first plurality of user identifications (U1, U2, U3, U4) sharing a first fixed access line (L1) via which said authentication unit (AU) is coupled to said customer premises multimedia equipment (EQUIP) said authentication unit (AU) comprises:
- a storing means (MEM) to predefine for each one of a plurality of fixed access lines (L1, L2, ..., L16) that comprises said first fixed access line (L1), an association between said one fixed access line and a plurality of Internet Protocol Multimedia Subsystem Profiles and to provide thereby a plurality of associations, each one of said plurality of Internet Protocol Multimedia Subsystem Profiles being related to one of a plurality of user identifications sharing said one fixed access line, said storing means (MEM) comprises hereby a first plurality of associations between said first fixed access line (L1) and a first plurality of Internet Protocol Multimedia Subsystem Profiles (P13) each being related to one of said first plurality of user identifications (U1, U2, U3, U4); and
- a processor (P) to determine, for a service request (REQ) that comprises said user identification (U3) and being transmitted by said terminal (T3) via said first fixed access line (L1), said user identification (U3) and said first fixed access line (L1); and to control said plurality of associations upon the presence of an association between said first fixed access line (L1) and an Internet Protocol Multimedia Subsystem Profile (P13) being related to said user identification (U3); and to provide thereby authentication (OK; P13) for said user identification (U3) for at least one Internet Protocol Multimedia Subsystem service.

8. The authentication unit (AU) according to claim 7, **characterized in that** said first plurality of associations being dynamically provided by said user with said user identification (U3) via a predefined secure web interface.

9. The authentication unit (AU) according to claim 7, **characterized in that** said first plurality of associations comprises a host-user Internet Protocol Multimedia Subsystem Profile being related to a host-user identification identifying a host-user sharing said one fixed access line under a control of said user (U3).

10. The authentication unit (AU) according to claim 7, further **characterized by** that said authentication unit (AU) is comprised in an access node (AN).

11. The authentication unit (AU) according to claim 7, **characterized in that** said authentication unit (AU) being implemented according to a distributive way, whereby said storing means comprises:
- a first sub-storing means (MEM21) to store first sub-associations between each said one of said plurality of fixed access lines and an assigned Internet Protocol address being assigned to said one fixed access line; and
- a second sub-storing means (MEM22) to store second sub-associations between said assigned Internet Protocol address and said plurality of Internet Protocol Multimedia Subsystem profiles; and whereby said processor comprises:
- a first sub-processor (P21) to control said first sub-storing means (MEM21) upon the presence of an association between said first fixed access line and a said assigned Internet Protocol address and to provide thereby said assigned Internet Protocol address; and
- a second sub-processor (P22) to control, further based upon said assigned Internet Protocol address, said second sub-storing means (MEM22) upon the presence of an association between said assigned Internet Protocol address and an Internet Protocol Multimedia Subsystem profile being related to said user identification.

12. The authentication unit (AU) according to claim 11, further **characterized by** that said first sub-storing means (MEM21) and said first sub-processor (P21) being comprised in an access node (AN), and that said second sub-storing means (MEM22) and said second sub-processor (P22) being comprised in an Application Server Provider (ASP).
